# EUROPEAN PATENT APPLICATION

(11) **EP 2 221 728 A1**
(43) Date of publication of application: **25.08.2010**
(21) Application number: 10153079.8
(22) Date of filing: 09.02.2010
(51) Int. Cl.: G06F 13/38

(54) **Wireless streamed data to usb converter and method**

(30) Priority: 19.02.2009 US 389139
(71) Applicant: Delphi Technologies, Inc., Troy, MI 48007 (US)
(72) Inventor: Rohaly, Christopher J., Kokomo, IN 46901 (US); Baumgarte, Joseph W., Carmel, IN 46033 (US); Kelly, Phillip W., Kokomo, IN 46901 (US); Funk, John D., Galveston, IN 46932 (US); Hinsberger, James J., Kokomo, IN 46901 (US); Walter, Scott A., Noblesville, IN 46060 (US); Bickford, Brian L., Kokomo, IN 46902 (US)
(74) Representative: Denton, Michael John

(57) **Abstract**

A converter (20) and method for converting wirelessly streamed data to USB compatible data is provided. The converter (20) includes a USB connector (22) for interfacing with a first electronic device (12) that is USB ready to provide USB compatible data, such as file and directory data structure. The converter (20) also includes a wireless communication link (28) that is adapted to receive wirelessly streamed data from a second electronic device (18). The converter (20) further includes control circuitry (24) for processing the wirelessly streamed data and converting the streamed data to USB compatible data that is compatible with the USB ready first electronic device (12) such that the streamed data from the second electronic device (18) may be used by the first electronic device (12).

## Description

### Technical Field

The present invention generally relates to wireless communications and, more particularly relates to the handling of streaming data from a wireless electronic device for use in another electronic device.

### Background of the Invention

In the consumer electronics market, there exist numerous devices configured with universal serial bus (USB) connectability. For example, MP3 players or playback devices are designed into a USB stick, also referred to as a thumb drive, jump drive or USB drive. An MP3 playback device has a memory storage medium that allows a user to store a large number of music files and play the stored audio music files back on a radio or other audio device equipped with a USB interface.

Short-range wireless communication is also available with many electronic devices, such as cell phones, microphones, earpiece headsets, laptop computers, and desktop computers. Short-range wireless communication has increasingly become available on many vehicles to communicate with electronic devices employed in the vehicle. Many of these wireless devices are typically configured with a popular wireless communication package, such as Bluetooth^{®}. Bluetooth^{®} enabled devices are currently developed and sold by many companies.

Many vehicle audio systems have been equipped with USB interfaces to accommodate personal MP3 players. In these systems, the USB stick is generally required to be physically connected to a USB connector. In the future, more Bluetooth^{®} audio players are expected to increase in popularity, which provide streaming audio functionality with phones or other devices that can download, store, and play back large numbers of audio files. However, many existing vehicle devices are unable to effectively accommodate streaming audio downloaded from Bluetooth^{®} devices, since these devices only support USB stick file playback devices.

Accordingly, it is therefore desirable to provide for the ability to provide streamed data, such as streamed audio, from one electronic device to another electronic device that requires a USB compatible connector.

### Summary of the Invention

According to one aspect of the present invention, a converter is provided for converting wirelessly streamed data to USB compatible data. The converter includes a USB connector for interfacing with a first electronic device that is USB ready to provide USB compatible data. The converter also includes a wireless communication link that is adapted to receive wirelessly streamed data from a second electronic device. The converter further includes control circuitry for processing the wirelessly streamed data and converting the streamed data to USB compatible data that is compatible with the USB ready first electronic device such that the streamed data from the second electronic device may be used by the first electronic device.

According to another aspect of the present invention, a method of converting wirelessly streamed data from a wireless device to a USB compatible format is provided. The method includes the steps of receiving in a converter via a wireless communication link streamed data from a wireless first electronic device that is USB ready, and processing the streamed data with the converter. The method also includes the step of transforming the streamed data to a format that appears as USB compatible data. The method further includes the step of transmitting the USB compatible data to a second electronic device by way of a USB connector.

These and other features, advantages, and objects of the present invention will be further understood and appreciated by those skilled in the art by reference to the following specification, claims and appended drawings.

### Brief Description of the Drawings

The present invention will now be described, by way of example, with reference to the accompanying drawings, in which:

FIG. 1 is a schematic view of a vehicle employing a radio and USB connector communicating with a cell phone via a converter, according to one embodiment;

FIG. 2 is a block diagram illustrating the wireless to USB converter for converting wireless data to a USB format, according to one embodiment; and

FIG. 3 is a block diagram illustrating routines for converting streamed audio data from a Bluetooth® device to a USB format, according to one embodiment.

### Description of Preferred Embodiment

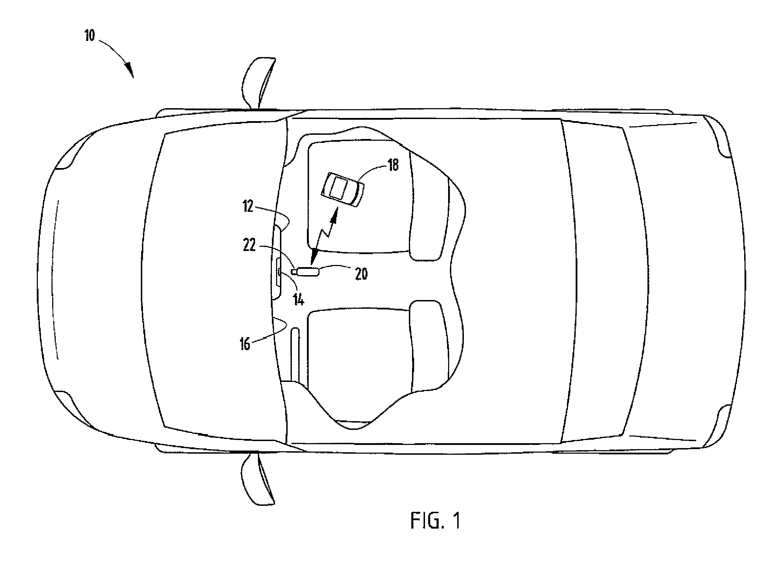

Referring now to FIG. 1, an automotive vehicle 10 is generally illustrated employing a first electronic device shown as a radio 12 or other audio entertainment device installed therein. The vehicle 10 further employs a universal serial bus (USB) connector 14 shown provided in or near the radio. The USB connector 14 may be located in a vehicle dash 16, according to one embodiment. It should be appreciated that the USB connector 14 may be located elsewhere within the passenger compartment of the vehicle 10 to allow a user of the vehicle 10 to connect and disconnect USB compatible devices to the USB connector 14. The USB connector 14 allows for the transfer of USB compatible data, such as audio files, to the vehicle radio 12 or other electronic device. According to one example, audio music files in an MP3 format or other USB compatible format may be downloaded to the vehicle radio 12 by way of the USB connector 14.

Also shown employed within the vehicle 10 is a second electronic device, such as a cellular phone 18 equipped with wireless communication, such as a Bluetooth^{®} enabled phone. It should be appreciated that the driver or a passenger of the vehicle 10 may bring a cell phone 18 or other consumer electronics device into the vehicle 10 which provides wireless communication with the ability to download streamed data, such as audio music files, to the vehicle 10, particularly to another electronic device, by way of the wireless communication. According to one embodiment, the second wireless device 18 is a Bluetooth^{®} enabled cell phone that provides cellular phone connectivity and may download streamed data, such as streamed audio music. It should be appreciated that the second wireless device 18 may include one or more wireless devices, such as Bluetooth^{®} enabled cell phones, microphones, earpiece headsets, laptop computers, desktop computers, MP3 music players, iPods, and other wireless electronic devices.

Further shown included in the vehicle 10 is a wireless to USB converter 20, which is shown adapted to engage the USB connector 14 onboard the vehicle 10, according to one embodiment of the present embodiment. The converter 20 includes a USB connector 22 adapted to connect to the USB connector 14. The USB connector 14 and USB connector 22 may include wired contacts that connect together and matingly engaging corresponding housing structures as should be evident to those skilled in the art. The USB connector 22 may operate with a pre-existing device that is configured to physically and electrically engage the USB connector 14. Additionally, the converter 20 includes a wireless communication link in the form of a transceiver for wirelessly communicating with the wireless device 18. The converter 20 receives data from the wireless device 18 and converts the wireless data to USB compatible data, such as a file and directory data structure, which is usable by the radio 12.

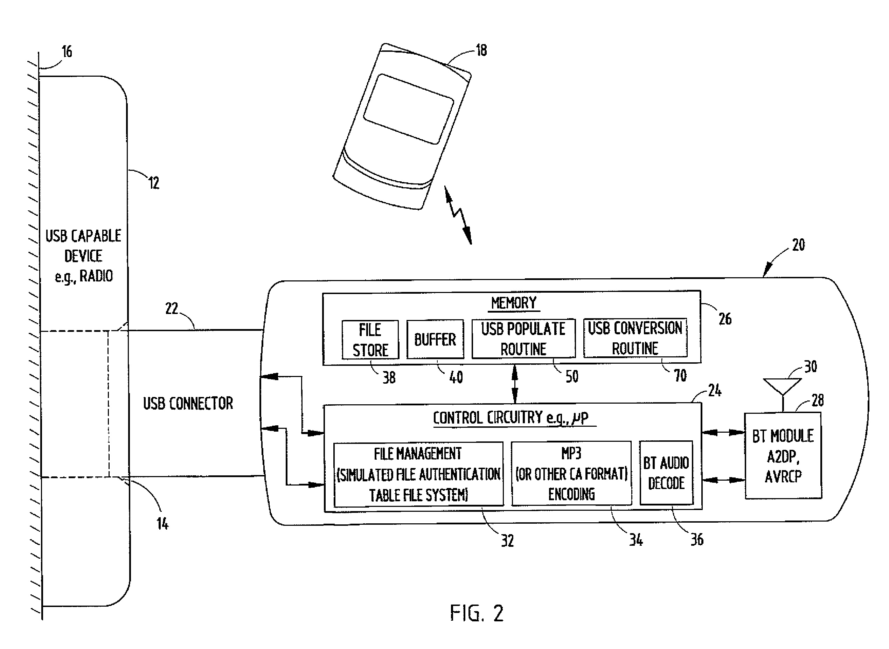

Referring to FIG. 2, the converter 20 is further illustrated employing a Bluetooth^{®} (BT) module 28, which serves as a transceiver communication link to communicate streaming data, such as streaming audio, between the converter 20 and the wireless device 18. Associated with the Bluetooth^{®} module 28 is an antenna 30. The Bluetooth^{®} module 28 has an advanced audio distribution profile (A2DP) that can accept Bluetooth^{®} streaming audio as an input. The Bluetooth^{®} module 28 also has an audio video remote control profile (AVRCP). The wireless communication link may include short-range wireless communication, such as Bluetooth^{®}, according to one embodiment. According to another embodiment, the wireless communication link may allow short-range wireless communication via IEEE Spec. 802.11. It should be appreciated that the wireless communication link may include medium-range and long-range wireless communication, such as may be experienced with a local area network (LAN) wireless communication link.

The converter 20 is also shown including control circuitry 24, which may include a processor, such as a microprocessor, according to one embodiment. The control circuitry 24 may include analog and/or digital circuitry, including an application specific integrated circuit (ASIC) or other known circuitry, according to other embodiments. The control circuitry 24 may implement Bluetooth^{®} audio decoding functionality 36, so as to decode the received Bluetooth^{®} streaming audio signals. Additionally, control circuitry 24 may employ encoding functionality, such as MP3 or other CA format encoding. The decoding and encoding functionality may transcode the streamed audio data into a USB compatible data format. The control circuitry 24 further includes a file management circuitry 32. The file management circuitry 32 may include a simulated file allocation table (FAT) file architecture, according to one embodiment.

The converter 20 further includes memory 26, which may include volatile and non-volatile storage medium, such as random access memory (RAM), read-only memory (ROM), electrically erasable programmable read-only memory (EEPROM), flash memory, and other memory storage devices. The memory 26 includes a file store 38 or storage area for storing downloaded files of streamed data from the wireless device 18. Memory 26 also includes a buffer 40 for buffering the streamed audio data. The buffer 40 may allow for piecemeal transmission of audio files to be played smoothly on the USB compatible device e.g., radio 12, connected thereto without interruption. Memory 26 further includes a USB directory structure populate routine 50 for communicating with the wireless electronic device 18 and building or populating a USB directory structure. The memory 26 further includes a USB conversion routine 70 for converting the wireless streamed data to USB directory structure and sending the converted data to the radio 12, according to one embodiment. The routines 50 and 70 may be executed by the processor or other control circuitry 24.

Accordingly, the converter 20 includes the Bluetooth^{®} module 28 or other wireless communication link, processing and conversion circuitry for converting the streamed data to a USB compatible data structure, and file management and storage. Control circuitry 24 includes the file management system 32 for managing the files stored within the file store 38 of memory 26. It should be appreciated that the processor or other control circuitry 24 communicates with the wireless second electronic device 18 and queries the wireless device 18 to create a list of various files to populate the directory, and, in addition communicates with the electronic first device 12 in the vehicle 10 to transcode the wireless format to USB compatible format and provides the transcoded file to the USB compatible first electronic device 12.

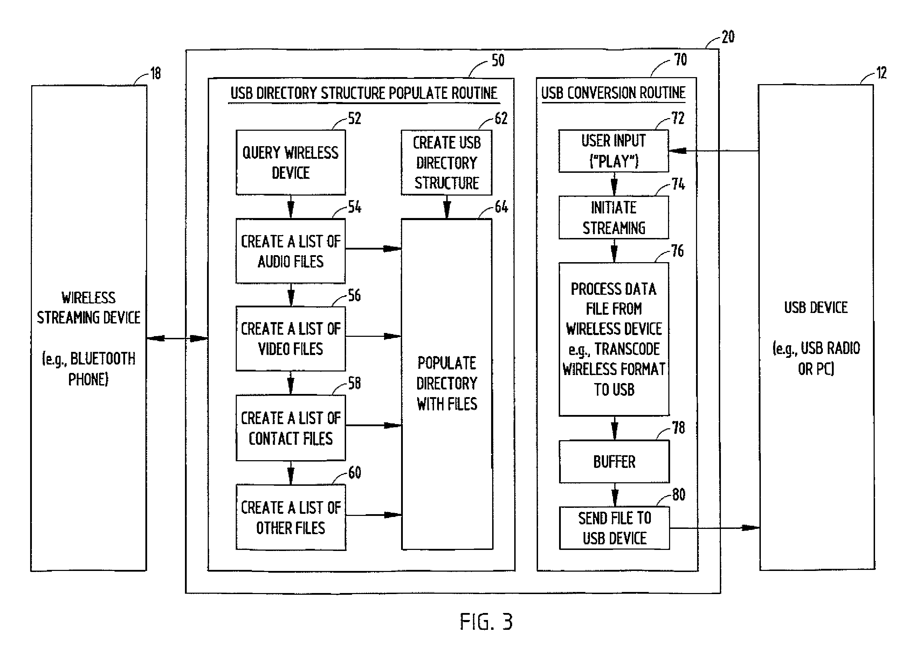

The USB directory structure populate routine 50 is illustrated in FIG. 3 communicating with the wireless streaming second electronic device 18. Routine 50 queries the wireless device 18 as shown in step 52 and creates a list of audio files as shown in step 54. Additionally, routine 50 creates a list of video files in step 56, creates a list of contact files in step 58 and creates a list of other files in step 60. Routine 50 also includes step 62 of creating the USB directory structure. The audio, video, contact and other files created by way of the query of the wireless device 18 are populated within a populate directory with files in block 64. Accordingly, routine 50 creates and populates a directory of files resulting from the query of the wireless device 18 and the files are then made available for conversion to a USB compatible format and are therefore usable in a USB compatible device.

The USB conversion routine 70 is also illustrated in FIG. 3 communicating with the electronic device 12 onboard the vehicle 10. Routine 70 receives a user input command such as, for example, the audio "play" command from the first electronic device 12 in step 72. Upon receiving the appropriate user input command, routine 70 proceeds to initiate streaming of the data, such as audio, from the wireless second device 18 in step 74. Next, routine 70 proceeds to process the streamed data file received from the wireless second device 18 in step 76. The step of processing the data file may include transcoding the wireless streaming data format to a USB compatible format. Routine 70 then proceeds to buffer the processed data file in step 78. By buffering the data file, a piecemeal transmission of audio files may be played smoothly on a reading device without interruption to avoid problems that may otherwise be caused by piecemeal audio streaming. Finally, routine 70 proceeds to send the processed and buffered file to the USB compatible first device 12 at step 80 such that the converted data is usable by the USB compatible device 12.

The converter 20 may be housed within a housing using a USB stick form factor, according to one embodiment. The converter 20 can be added to a product that supports USB file playback and allows the user to stream audio via a Bluetooth^{®} playback device, such as a mobile phone or MP3 player, without requiring an upgrade to the installed audio system. The converter 20 has a USB interface and may emulate a mass-storage class (MSC) USB device. Additionally, the converter 20 may interface to a USB compatible audio device as an audio file manager, and Bluetooth^{®} content may appear as compressed audio files.

Accordingly, the converter 20 advantageously converts wireless streamed data to a USB compatible file, such as a USB ready file and directory data structure, such that wireless streamed data is easily made available and usable for a USB compatible electronic device. The converter 20 allows wireless electronic devices to communicate with USB compatible devices. The converter is easy to implement, cost-effective, and is particularly useful onboard a vehicle.

The above description is considered that of preferred embodiments only. Modifications of the invention will occur to those skilled in the art and to those who make or use the invention. Therefore, it is understood that the embodiments shown in the drawings and described above are merely for illustrative purposes and not intended to limit the scope of the invention, which is defined by the following claims as interpreted according to the principles of patent law, including the doctrine of equivalents.

## Claims

1. A converter (20) for converting wirelessly streamed data to USB compatible data, said converter comprising:
a USB connector (22) for interfacing with a first electronic device (12) that is USB ready to provide USB compatible data;
a wireless communication link (28) that is adapted to receive wirelessly streamed data from a second electronic device (18) that is USB ready; and
control circuitry (24) for processing the wirelessly streamed data and converting the streamed data to USB compatible data that is compatible with the USB ready first electronic device (12) such that the streamed data from the second electronic device (18) may be used by the first electronic device (12).

2. The converter as defined in claim 1, wherein the control circuitry (24) converts the streamed data to a USB file and directory data structure.

3. The converter as defined in claim 1, wherein the wireless streamed data comprises streaming audio.

4. The converter as defined in claim 3, wherein the streaming audio is converted to a USB compatible MP3 format by the control circuitry (24).

5. The converter as defined in claim 1, wherein the control circuitry (24) comprises decoding circuitry (36) for decoding the streamed data.

6. The converter as defined in claim 5, wherein the control circuitry (24) further comprises encoding circuitry (34) for encoding the decoded data to USB format.

7. The converter as defined in claim 1, wherein the wireless communication link (28) comprises a Bluetooth^{®} communication link.

8. A method of converting wirelessly streamed data from a wireless device (18) to a USB compatible format, said method comprising the steps of:
receiving in a converter (20) via a wireless communication link (28) streamed data from a wireless first electronic device (18) that is USB ready;
processing the streamed data with the converter (20);
transforming the streamed data to a format that appears as USB compatible data; and
transmitting the USB compatible data to a second electronic device (12) by way of a USB connector (22).

9. The method as defined in claim 8, wherein the step of transforming the streamed data comprises transferring the streamed data to a USB file and directory data structure.

10. The method as defined in claim 8, wherein the streamed data comprises streaming audio.

11. The method as defined in claim 10, wherein the step of transforming the streamed data comprises transforming the streaming audio to a USB compatible MP3 format.

12. The method as defined in claim 8, wherein the step of transforming the streamed data comprises decoding the streamed data.

13. The method as defined in claim 12, wherein the step of transforming the streamed data comprises encoding the decoded data to a USB format.

14. The method as defined in claim 8, wherein the wireless communication link (28) comprises a Bluetooth^{®} communication link.
